# EUROPEAN PATENT APPLICATION

(11) **EP 2 650 846 A2**
(43) Date of publication of application: **16.10.2013**
(21) Application number: 13162629.3
(22) Date of filing: 05.04.2013
(51) Int. Cl.: G07F 15/00, E04H 6/42

(54) **Electric-power generation system**

(30) Priority: 13.04.2012 JP 2012091489
(71) Applicant: Honda Motor Co., Ltd., Tokyo 107-8556 (JP)
(72) Inventor: Kai, Takeshi, Saitama, 351-0193 (JP)
(74) Representative: Herzog, Markus

(57) **Abstract**

In an electric-power generation system: an electric-power generation device is mounted on a vehicle and generates electric power by use of energy existing outside the vehicle; an electric-power receiving device is arranged in a parking space and receives the electric power generated by the electric-power generation device; and an incentive providing device transmits information on an incentive in order to provide the incentive to the user of the vehicle when the electric-power receiving device receives the electric power.

## Description

### BACKGROUND OF THE INVENTION

### Field of the Invention

The present invention relates to a technique of an electric-power generation system using a parking space.

### Description of the Related Art

Carbon dioxide is considered to be a factor of the global warming-up. In order to reduce emission of carbon dioxide, use of photovoltaic power generation, which does not emit carbon dioxide during electric-power generation, has been widely spreading.
For example, Japanese Patent Laid-Open No. 2010-192714 (which is hereinafter referred to as Patent Literature 1) discloses a technique in which a flexible solar cell seat is arranged in each parking space in a parking lot in such a manner that the solar cell seat covers the almost entire area of the ground in each parking space, and the electric power generated by the solar cell seat is collected and stored in an electric power storage device.
In addition, Patent Literature 1 also discloses that the solar cell seat is moved aside for making room for parking a car before the car is parked in the parking space, and electric-power generation is continued by covering the parked car with the solar cell seat after the car is parked.

However, according to the configuration disclosed in Patent Literature 1, the solar cell seat (as an electric-power generation device), as well as the electric power storage device, is required to be arranged in the parking space, so that the equipment cost is great.
In addition, according to the configuration disclosed in Patent Literature 1, it is necessary to perform the bothersome operations of moving aside the solar cell seat for making room for parking, and covering the parked car with the solar cell seat after the parking.

In view of the above, the object of the present invention is to provide an electric-power generation system which enables easy generation of electric power in a parking space.

### SUMMARY OF THE INVENTION

In order to achieve the above object, the present invention provides an electric-power generation system, in which an electric-power generation device is mounted on a vehicle and generates electric power by use of energy existing outside the vehicle, an electric-power receiving device is arranged in a parking space and receives the electric power generated by the electric-power generation device, and an incentive providing device transmits information on an incentive when the electric-power receiving device receives the electric power.

In the electric-power generation system constructed as above, the vehicle is equipped with the electric-power generation device. Therefore, it is possible to easily perform environmental electric-power generation (e.g., photovoltaic electric-power generation) by use of the parking space. In other words, the duration for which the vehicle is parked can be effectively used for environmental electric-power generation. In addition, since the incentive is provided to the vehicle side when the generated electric power is transmitted from the vehicle to the electric-power receiving device in the parking lot, the motivation to equip vehicles with the electric-power generation device is promoted. Further, the parking lot is not required to be equipped with an electric-power generation device and is required to be equipped with only the electric-power receiving device, so that the equipment cost in the parking lot can be reduced. Thus, the electric-power generation system enabling easy electric-power generation can be constructed in the parking lot.

In the electric-power generation system according to the present invention, preferably, the incentive providing device changes the amount of the incentive on the basis of the amount of the electric power received by the electric-power receiving device.

According to the above configuration, it is possible to form a scheme for positively performing environmental electric-power generation and selling the generated electric power, and construct an electric-power generation system enabling easy electric-power generation in a parking space.

In the electric-power generation system according to the present invention, preferably, the incentive is money or a number indicating points which can be converted into an amount of money.

According to the above configuration, compensation for the electric power generated on the vehicle side and received by the parking lot side can be provided as an incentive to the vehicle side. Therefore, the motivation to equip vehicles with the electric-power generation device is promoted.

In the electric-power generation system according to the present invention, preferably, the incentive providing device includes a vehicle identification unit, which acquires identification information identifying the vehicle, and determines an incentive recording unit in the name of the user of the vehicle on the basis of the acquired identification information.

According to the above configuration, the vehicle about which information is registered in advance can be automatically identified by the vehicle identification unit. Therefore, it is possible to identify the user of the identified vehicle, and provide the incentive to the identified user.

According to the present invention, the electric-power generation system enabling easy electric-power generation in a parking space is provided.

### BRIEF DESCRIPTION OF THE DRAWINGS

FIG. 1 is a perspective view illustrating a vehicle equipped with a photovoltaic device and an antenna;
FIG. 2 is a diagram illustrating examples of functions in an electric-power generation system according to an embodiment of the present invention;
FIG. 3A is a cross-sectional side view of an example of a construction in a parking lot;
FIG. 3B is a bottom view of a vehicle;
FIG. 4 is a diagram illustrating an example of a structure of a condenser plate;
FIG. 5A is a diagram illustrating a variation of a manner of mounting of photovoltaic devices on a vehicle, where two photovoltaic devices have a common edge and can rotate around the common edge;
FIG. 5B is a diagram illustrating a variation of a manner of mounting of a photovoltaic device on a vehicle, where a single photovoltaic device can rotate around an edge;
FIG. 6 is a diagram illustrating a variation of a construction in a parking lot; and
FIG. 7 is a diagram illustrating an example of a business scheme for spreading use of the electric-power generation system according to the embodiment.

### DETAILED DESCRIPTION OF THE PREFERRED EMBODIMENTS

Embodiments of the present invention are explained in detail below with reference to accompanying drawings.

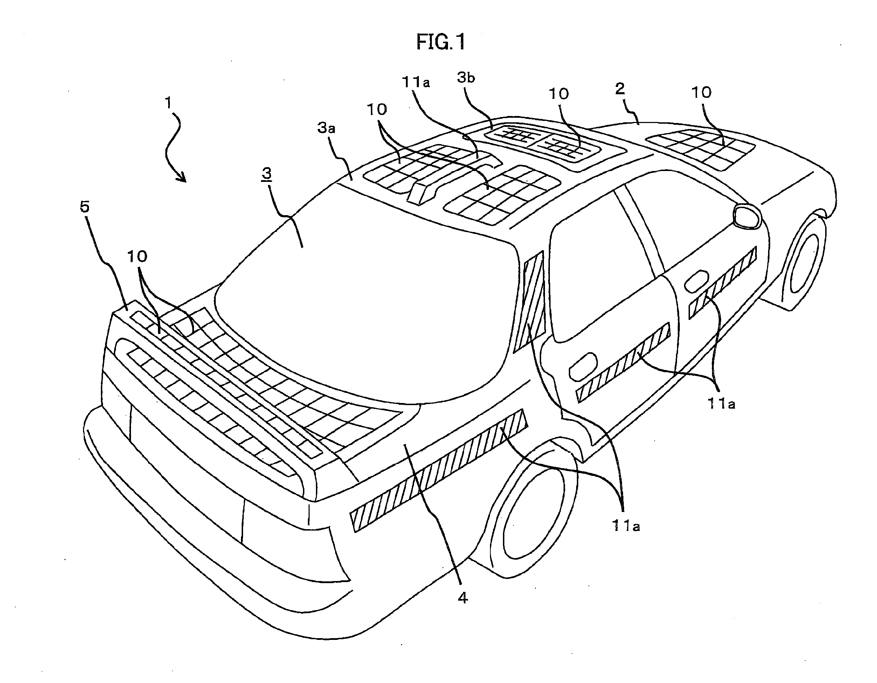

First, an example of a vehicle which can generate electric power by use of externally existing energy such as the energy of sunlight or an electric wave is explained below with reference to FIG. 1.

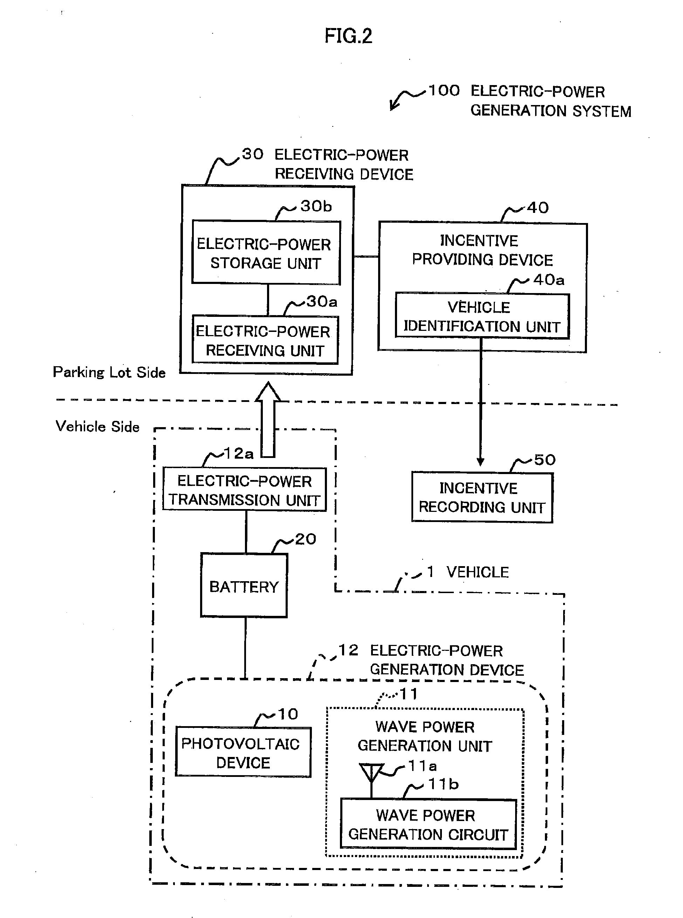

As illustrated in FIG. 1, photovoltaic devices 10 (e.g., solar panels) are mounted on portions of the body of the vehicle 1 which face mainly upward (e.g., a hood 2 on the front side, a roof 3a of a passenger compartment 3, a trunk lid 4 on the rear side, and a rear wing 5) in such a manner that the photovoltaic devices 10 can generate electric power from sunlight. Thus, the above photovoltaic devices 10 mounted on the vehicle 1 constitute an electric-power generation device 12. The electric-power generation device 12 is mounted on the vehicle 1, and will be explained later with reference to FIG. 2.

The photovoltaic devices 10 are, for example, solar panels. Generally, the solar panels include multiple types according to the constituent materials and the structures. Therefore, it is possible to choose as the photovoltaic devices 10 one or more appropriate types of photovoltaic devices according to the shapes and features (e.g., the materials constituting the surfaces on which the photovoltaic devices are to be mounted) of the respective body portions on which the photovoltaic devices 10 are to be mounted. For example, it is possible to mount different types of photovoltaic devices on the portions constituted by steel plates or resins (such as the hood 2, the roof 3a of the passenger compartment 3, the trunk lid 4, the rear wing 5, and the like) and on the portions constituted by glass (such as a daylighting window (sunroof) 3b in the roof 3a). The photovoltaic devices 10 may be realized by only a single type of photovoltaic device or more than two types of photovoltaic devices.

The electric power generated by the photovoltaic devices 10 mounted on the body portions of the vehicle 1 is stored in a battery 20. The battery 20 is mounted on the vehicle 1 (as illustrated in FIG. 2).

In addition, as illustrated in FIG. 1, an antenna 11a, which receives externally propagating electric waves, is mounted on the vehicle 1. The expression "externally propagating" means propagating in the air outside the vehicle 1 while the vehicle 1 is running or stopped.
It is desirable that the antenna 11a be configured to receive the externally propagating, commercial electric waves such as the electric waves for television, radio, portable telephone, and the like. For example, a configuration of the antenna 11a to receive electric waves in one or more frequency bands from which the wave power generation circuit 11b (illustrated in FIG. 2) can most efficiently generate electric power may be determined by a preliminary experiment or the like.
The antenna 11a may be formed in the shape of a thin film and attached to an outer surface of the vehicle 1, or may be attached to an inner surface of a steel plate constituting an exterior of the vehicle body. Alternatively, the antenna 11a may be mounted on the roof 3 a in such a manner that the antenna 11a protrudes upward.

It is desirable that the antenna 11a be constituted by at least one piece each having a length of half the wavelength of the electric wave to be received. In addition, the antenna 11a may be a phased array antenna, the directivity of which can be changed.

The energy of the electric wave received by the antenna 11a is inputted into the wave power generation circuit 11b (illustrated in FIG. 2) and is then converted into electric power. That is, according to the present embodiment, the antenna 11a and the wave power generation circuit 11b constitute a wave power generation unit 11. The wave power generation unit 11 constitutes the electric-power generation device 12 (illustrated in FIG. 2).

Next, examples of functions arranged in the vehicle in the electric-power generation system according to the present embodiment are explained with reference to FIG. 2 (and FIG. 1 when necessary).

As illustrated in FIG. 2, the vehicle 1 is equipped with the electric-power generation device 12, an electric-power transmission unit 12a, and the battery 20, which constitute the electric-power generation system 100.

The battery 20 is different from the battery which stores electric power needed for driving the vehicle 1. The battery 20 is constituted by a secondary battery, which is rechargeable. The secondary battery is, for example, a lead-acid battery, a nickelcadmium battery, or a lithium-ion battery.

The electric-power generation device 12 includes the photovoltaic devices 10 and the wave power generation unit 11, and the electric power generated by the photovoltaic devices 10 and the wave power generation unit 11 is stored in the battery 20.
The photovoltaic devices 10 include a rectifier (not shown), which prevents a counter flow of electric power. In the photovoltaic devices 10, the electric power generated, for example, by the solar panels is supplied to the battery 20.
The wave power generation unit 11 includes the antenna 11a and the wave power generation circuit 11b. Although details of the wave power generation circuit 11b are not illustrated, the wave power generation circuit 11b is, for example, a rectifier circuit constituted by a coil and a rectifier diode, and the rectifier circuit rectifies the electric wave received by the antenna 11a to generate electric power, and supplies the generated electric power to the battery 20.

The electric-power transmission unit 12a has a function of transmitting the electric power stored in the battery 20, to an electric-power receiving device 30, which is arranged in the parking lot. The electric power is transmitted, for example, in a wireless manner (e.g., by microwave).
Even in the case where the vehicle 1 is an electric vehicle (EV), the electric-power transmission unit 12a can transmit to the electric-power receiving device 30 surplus electric power over the electric power needed for driving the vehicle 1. In the case where the vehicle 1 is a hybrid electric vehicle (HEV) or a gasoline-powered vehicle, the electric-power transmission unit 12a may transmit to the electric-power receiving device 30 all the electric power generated by the electric-power generation device 12.

In addition, as illustrated in FIG. 2, the vehicle 1 is equipped with an incentive recording unit 50. Specifically, the incentive recording unit 50 has a function of recording information on an incentive. Specifically, the incentive recording unit 50 is realized by, for example, a recording unit in a computer in which information in the name of the user of the vehicle 1 is recorded, and in particular by a storage unit which is used for management of an account in the name of the user of the vehicle 1, or a storage unit which stores information on a points card in the name of the user of the vehicle 1 handled by shops and the like, or an IC (integrated circuit) card which stores the balance and the like. Further, money or a coupon may be provided as an incentive.

Next, examples of functions which the parking lot in the electric-power generation system according to the present embodiment has are explained with reference to FIG. 2.
At least the electric-power receiving device 30 and an incentive providing device 40 are arranged in the parking lot.
The electric-power receiving device 30 includes an electric-power receiving unit 30a and an electric-power storage unit 30b. The electric-power receiving device 30 has functions of receiving electric power from the vehicle 1, supplying electric power stored in the electric-power storage unit 30b, for use in monitoring and management of the parking lot and for use in a shop which is accompanied by the parking lot, and selling surplus electric power to an electric power company.

The electric-power receiving unit 30a has a function of receiving electric power transmitted from the electric-power transmission unit 12a in the vehicle 1. The electric-power storage unit 30b is constituted by a secondary battery, which is rechargeable. The secondary battery is, for example, a lithium-ion battery.
Although not shown, it is preferable that the electric-power receiving device 30 have a display device which displays, for example, an indication as to whether or not the electric-power receiving unit 30a is normally receiving electric power, an indication of the received amount of electric power, and an indication of the fee for the received electric power.

The incentive providing device 40 has a function of calculating the fee for the electric power generated by and received from the vehicle 1 and providing an incentive to the user of the vehicle 1 when the incentive providing device 40 receives the generated electric power from the vehicle 1. Specifically, the incentive providing device 40 transmits information on the incentive to the incentive recording unit 50.
In addition, although the amount of the incentive may be fixed, the incentive providing device 40 may further has a function of changing the amount of the incentive according to the amount of the electric power received by the electric-power receiving device 30 and a function of converting the incentive to an amount of money or to a number indicating points which can be converted to the amount of money.

Further, the incentive providing device 40 includes a vehicle identification unit 40a. The vehicle identification unit 40a has a function of acquiring identification information for identifying the vehicle 1. Specifically, the vehicle identification unit 40a may have a function of reading information about a vehicle from an ETC (electronic toll collection system) card by use of an ETC system, where the information about a vehicle is set up in the ETC card. Furthermore, the vehicle identification unit 40a may have a function of reading an indication on the vehicle registration plate on the vehicle 1. The vehicle identification unit 40a identifies the user of the vehicle 1 on the basis of the information (identifying the vehicle 1) which is read as above. Then, the incentive providing device 40 identifies the incentive recording unit 50 in the name of the identified user.

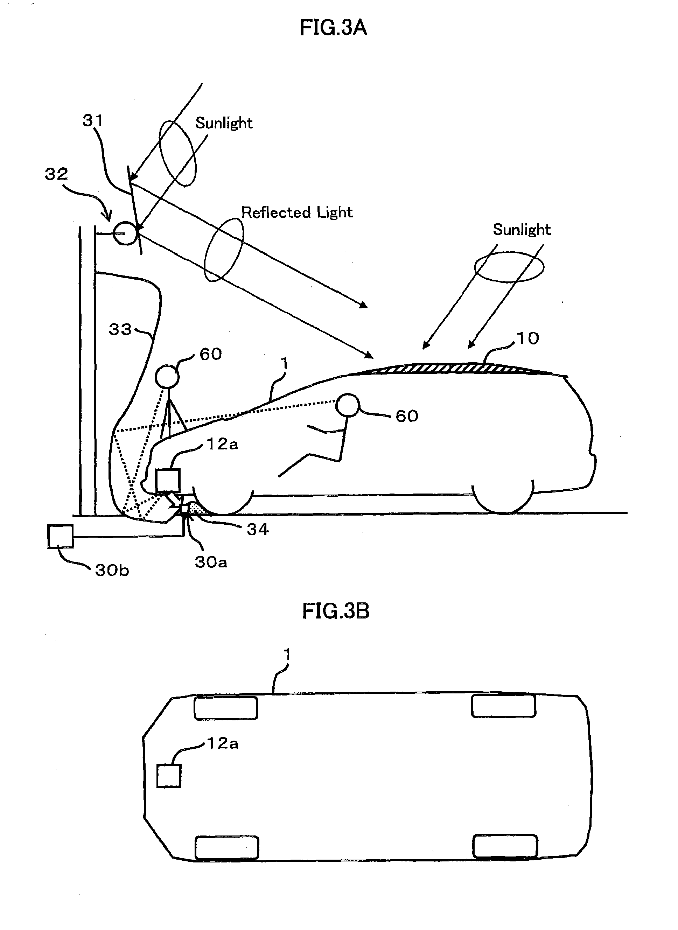

Next, an example of a construction in the parking lot is explained below with reference to FIG. 3. In the following explanation, the electric-power generation device 12 is assumed to be realized by the photovoltaic devices 10.

FIG. 3A is a cross-sectional side view of the construction in the parking lot. In the example of FIG. 3A, the vehicle 1 is assumed to be parked forward (front-in parked).
A vehicle stopper 34 for the vehicle 1 includes the electric-power receiving unit 30a, which receives electric power from the electric-power transmission unit 12a by wireless transmission. In addition, the electric-power receiving unit 30a stores the received electric power in the electric-power storage unit 30b.

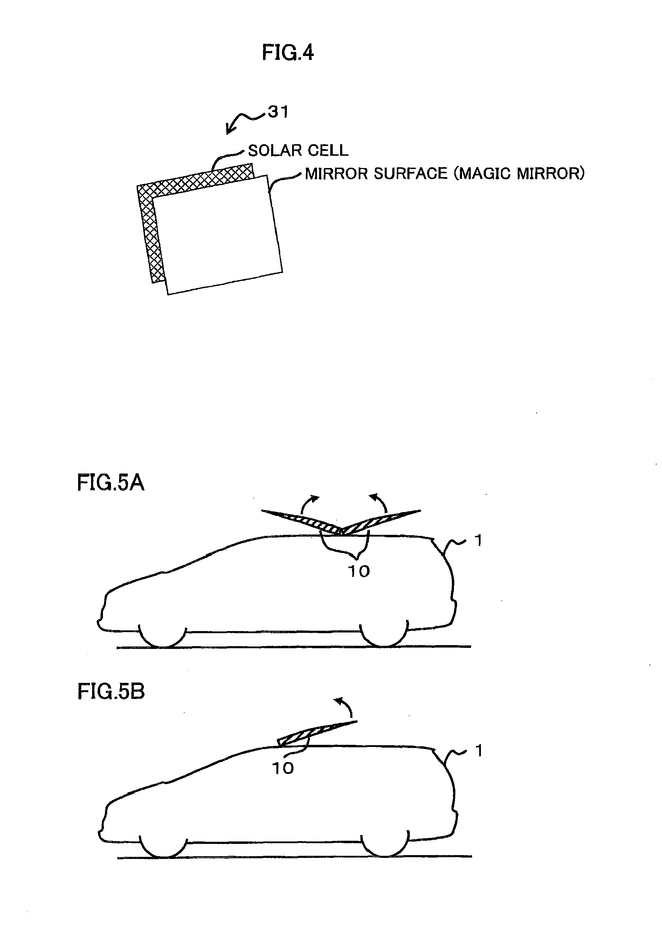

A condenser plate 31 is arranged for increasing, by reflection of sunlight, the amount of light brought into the photovoltaic devices 10 (which is mounted on the vehicle 1).
A condenser-plate controller 32 appropriately controls the orientation of the condenser plate 31 in correspondence with variations in the position of the sunlight with time. Further, for example, it is possible to form a mirror surface like a magic mirror on one side of the condenser plate 31, and arrange a solar cell on the back surface of the condenser plate 31, as illustrated in FIG. 4. In this case, the electric power generated by the above solar cell can be used as standby power in the construction in the parking lot.

The position confirmation plate 33 is constituted by a mirrorlike plate or the like (formed of, for example, metal) in order to enable the user 60 to confirm the positional relationship between the electric-power transmission unit 12a and the electric-power receiving unit 30a while the user 60 is driving the vehicle 1 for parking the vehicle 1 into a parking space or after the user 60 gets off the vehicle 1. In FIG. 3A, examples of lines of sight are indicated by the dashed lines.

FIG. 3B is a bottom view of the vehicle 1. As illustrated in FIG. 3B, the electric-power transmission unit 12a is arranged to be able to transmit electric power to the electric-power receiving unit 30a.

FIGS. 5A and 5B are diagrams illustrating variations of the manner of mounting of the photovoltaic devices on the vehicle 1.
In the variation illustrated in FIG. 5A, two photovoltaic devices 10 have a common edge and can rotate around the common edge. In the variation illustrated in FIG. 5B, a single photovoltaic device 10 can rotate around an edge of the photovoltaic device 10.
Since each of the photovoltaic devices 10 in the arrangements of FIGS. 5A and 5B can be rotated, it is possible to cause each of the photovoltaic devices 10 in the arrangements of FIGS. 5A and 5B follow the movement of the sun so as to maximize the amount of the generated electric power. At this time, the accuracy of the adjustment of the orientation of each photovoltaic device can be increased by use of information on the latitude, the longitude, the calendar, and the GPS (global positioning system).

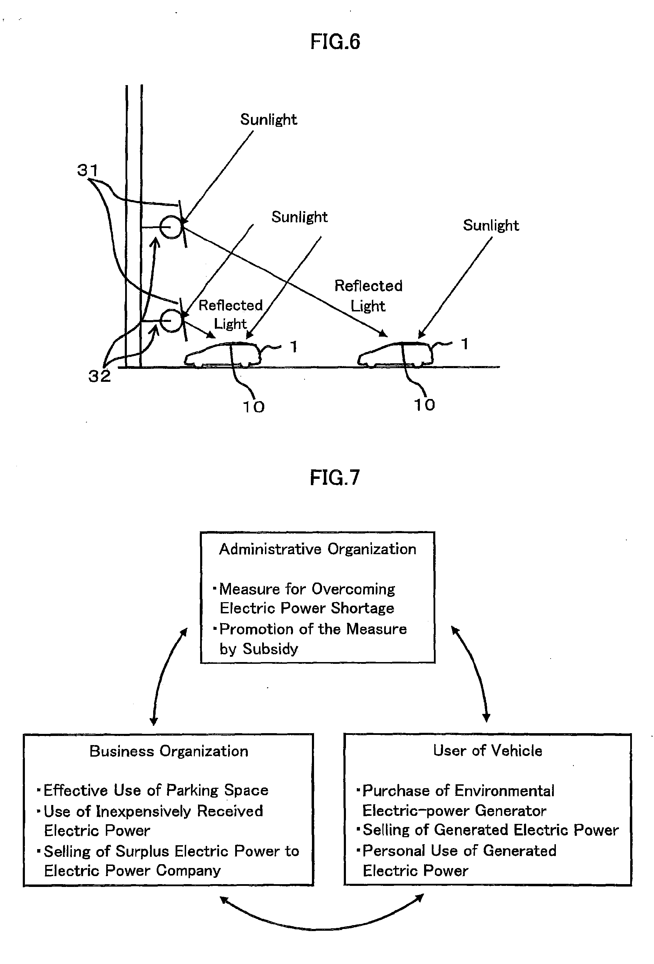

FIG. 6 is a diagram illustrating a variation of the construction in the parking lot. In the case where the parking lot includes multiple parking spaces, it is possible to arrange multiple condenser plates 31 in such a manner that the reflected light can be brought into one or more photovoltaic devices mounted on every vehicle.

Next, a business model using the electric-power generation system 100 according to the present embodiment is explained below with reference to FIG. 7.
The administrative organizations such as national and local governments are currently working on measures for overcoming electric power shortage. Therefore, it is possible to consider to promote construction of the electric-power generation system 100 according to the present embodiment, perform environmental electric-power generation by using the electric-power generation device 12 in the vehicle 1, and effectively use the electric power generated by the environmental electric-power generation. At this time, it is desirable that the administrative organizations prepare a system of providing a subsidy when the user of the vehicle 1 purchases the equipment for environmental electric-power generation (i.e., the electric-power generation device 12) or when a company or the like constructs the electric-power receiving device 30 in a parking space. In this case, the above system promotes construction of the electric-power generation system 100.

When the user of the vehicle 1 applies for the subsidy, purchases the equipment for environmental electric-power generation (the electric-power generation device 12), and mounts the equipment on the vehicle 1, electric power can be generated by simply parking the vehicle 1 by the user of the vehicle 1. Then, the user of the vehicle 1 can sell to a company or the like the electric power generated by the electric-power generation device 12, and receive the incentive. Further, the user of the vehicle 1 can personally use the generated electric power and recharge a rechargeable battery. Therefore, it is possible to suppress consumption of the electric power supplied from the electric power company, and contribute to overcoming of electric power shortage.

In order to efficiently use the parking space, a business organization, e.g., a company owning or operating the parking lot, can apply for a subsidy and construct the electric-power receiving device 30 in a parking space. While the parking space conventionally has only the value of land, the present embodiment enables storage of electric power in the parking space without construction of power generation equipment. In addition, the above business organization can receive electric power from the vehicle 1 at a lower price than the price of the electric power received from the electric-power generation company, and can therefore use electric power at low cost. Further, the above business organization can sell surplus electric power to the electric-power generation company, so that the business organization can contribute to overcoming of electric power shortage. Furthermore, expectations of selling electric power and receiving compensation for the sold electric power increases the frequency of visits of the user of the vehicle 1 to a shop accompanied by the parking lot equipped with the electric-power receiving device 30, and the number of users of vehicles each equipped as the vehicle 1 is expected to increase.

Moreover, increase in the number of the vehicles each equipped as the vehicle 1 (i.e., vehicles each having the equipment for environmental electric-power generation (the electric-power generation device 12)) and increase in the number of parking spaces in each of which the electric-power receiving device 30 is constructed contribute to overcoming of electric power shortage. Therefore, it is possible to consider that satisfactory win-win relationships between the users of vehicles and the business organizations operating parking lots will be established when use of the electric-power generation system according to the present embodiment spreads.

As explained above, in the electric-power generation system 100 according to the present embodiment, the electric-power generation device 12 is arranged in the vehicle 1, and the electric-power receiving device 30 is arranged in the parking space. In addition, when the electric-power receiving device 30 receives electric power from the electric-power generation device 12 in the vehicle 1 parked in the parking space, the incentive providing device 40 transmits information on an incentive to the incentive recording unit 50 in the name of the user of the vehicle 1 for providing the incentive to the user of the vehicle 1. Therefore, the parking lot is not required to be equipped with an electric-power generation device and is required to be equipped with only the electric-power receiving device 30, so that the equipment cost in the parking lot can be reduced. Thus, the electric-power generation system 100, which can easily generate electric power, can be constructed in the parking lot.

In an electric-power generation system: an electric-power generation device is mounted on a vehicle and generates electric power by use of energy existing outside the vehicle; an electric-power receiving device is arranged in a parking space and receives the electric power generated by the electric-power generation device; and an incentive providing device transmits information on an incentive in order to provide the incentive to the user of the vehicle when the electric-power receiving device receives the electric power.

## Claims

1. An electric-power generation system comprising:
an electric-power generation device which is mounted on a vehicle and generates electric power by use of energy existing outside the vehicle;
an electric-power receiving device which is arranged in a parking space and receives the electric power generated by the electric-power generation device; and
an incentive providing device which transmits information on an incentive when the electric-power receiving device receives the electric power.

2. The electric-power generation system according to claim 1, wherein the incentive providing device changes an amount of the incentive on the basis of an amount of the electric power received by the electric-power receiving device.

3. The electric-power generation system according to claim 1, wherein the incentive is money or a number indicating points which can be converted into an amount of money.

4. The electric-power generation system according to claim 1, wherein the incentive providing device includes a vehicle identification unit, which acquires identification information identifying the vehicle, and determines an incentive recording unit in a name of a user of the vehicle on the basis of the acquired identification information.
